# EUROPÄISCHE PATENTSCHRIFT

(11) **EP 4 526 667 B1**
(45) Veröffentlichungstag und Bekanntmachung des Hinweises auf die Patenterteilung: **12.08.2026**
(21) Anmeldenummer: 23729021.8
(22) Anmeldetag: 19.05.2023
(51) Int. Cl.: G01N 23/205, G02B 21/36, G01N 21/64

(54) **PTYCHOGRAPHISCHES BILDGEBUNGSVERFAHREN UND -SYSTEM**
PTYCHOGRAPHIC IMAGING METHOD AND SYSTEM
PROCÉDÉ ET SYSTÈME D'IMAGERIE PTYCHOGRAPHIQUE

(30) Priorität: 20.05.2022 DE 102022112789
(43) Veröffentlichungstag der Anmeldung: 26.03.2025
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: LIMPERT, Jens, 07751 Jena (DE); ROTHHARDT, Jan, 07745 Jena (DE); ESCHEN, Wilhelm, 07745 Jena (DE)
(74) Vertreter: Schneiders & Behrendt Bochum
(86) Internationale Anmeldenummer: PCT/EP2023/063474
(87) Internationale Veröffentlichungsnummer: WO 2023/222874

(56) Entgegenhaltungen:
- CN-A- 110 360 924
- US-A1- 2019 049 712
- CIPICCIA SILVIA ET AL: "Dual energy X-ray beam ptycho-fluorescence imaging", JOURNAL OF SYNCHROTRON RADIATION, vol. 28, no. 6, 5 October 2021 (2021-10-05), Hoboken, USA, pages 1916 - 1920, XP093075260, ISSN: 1600-5775, DOI: 10.1107/S1600577521008675
- DARREN J. BATEY ET AL: "Information multiplexing in ptychography", ULTRAMICROSCOPY, vol. 138, 31 December 2013 (2013-12-31), NL, pages 13 - 21, XP055292412, ISSN: 0304-3991, DOI: 10.1016/j.ultramic.2013.12.003

## Beschreibung

Die Erfindung betrifft ein Bildgebungsverfahren mit den Verfahrensschritten nach Anspruch 1.

Außerdem betrifft die Erfindung ein Bildgebungssystem zur Durchführung des Verfahrens nach Anspruch 10.

Die Ptychographie ist eine computergestützte Bildgebungsmethode, bei der Bilder durch die Verarbeitung zweier oder mehrerer Intensitätsmuster erzeugt werden, die durch Beugung oder Streuung von zumindest teilkohärentem Licht an einem Objekt durch Interferenz entstehen. Die Intensitätsmuster werden durch eine konstante Beleuchtungsfunktion (z.B. Fokusgeometrie der Beleuchtungsstrahlung oder Geometrie einer Aperturblende) erzeugt, die sich in Bezug auf das Objekt lateral um einen bekannten Betrag seitlich bewegt. Die Intensitätsmuster treten in einiger Entfernung von dem Objekt auf, so dass sich die gebeugten oder gestreuten Lichtwellen der Beleuchtungsstrahlung ausbreiten, überlagern und miteinander interferieren, um so die Intensitätsmuster zu erzeugen.

Die Ptychographie kann mit jeglicher zumindest teilkohärenten Strahlung, u.a. sichtbarem Licht, Röntgenstrahlung, extremem Ultraviolett (XUV) oder auch mit Elektronenstrahlung durchgeführt werden. Im Gegensatz zu konventionellen Linsenabbildungen wird die Ptychographie nicht von linsenbedingten Aberrationen beeinflusst. Die Erzeugung der Intensitätsmuster erfolgt in der Regel linsenlos. Dies ist besonders wichtig für die Abbildung von Wellenlängen im atomaren Bereich, wo es schwierig und teuer ist, qualitativ hochwertige Objektive mit hoher numerischer Apertur herzustellen.

Ein weiterer Vorteil der Ptychographie besteht darin, dass transparente Objekte abgebildet werden können. Dies liegt daran, dass die Methode auf die Phase der Beleuchtungsstrahlung, die das Objekt passiert hat, anspricht. Im Fall der biologischen Mikroskopie mit sichtbarem Licht bedeutet dies, dass Zellen nicht gefärbt oder markiert werden müssen, um einen Kontrast zu erzeugen.

Obwohl die an dem Objekt gebeugte oder gestreute Beleuchtungsstrahlung in der Ptychographie als Intensitätsmuster detektiert wird, bedeutet die mathematische Einschränkung durch die Translationsinvarianz der Beleuchtung in Kombination mit den bekannten lateralen Verschiebungen zwischen ihnen, dass die Phase des Wellenfeldes durch eine inverse Berechnung (Phasenrekonstruktionsalgorithmus) per Computer rekonstruiert werden kann. Damit können alle Informationen über das Wellenfeld der gebeugten oder gestreuten Beleuchtungsstrahlung (Amplitude und Phase) wiederhergestellt werden, und es können nahezu perfekte und quantitative Bilder des Objekts gewonnen werden, und zwar mit einer räumlichen Auflösung, die deutlich kleiner ist als die Größe des beleuchteten Bereichs auf dem Objekt. Die Anforderungen an die Beleuchtungsoptik sind vergleichsweise gering (siehe J. Rodenburg and A. Maiden, "Ptychography" in "Springer Handbook of Microscopy", herausgegeben von P. W. Hawkes und J. C. H. Spence , Springer International Publishing, 2019, Seiten 819 bis 904).

DARREN J. BATEY ET AL: "Information multiplexing in ptychography", Ultramicroscopy, Bd. 138, 31. Dezember 2013, Seiten 13-21, XP055292412, DOI: 10.1016/ j.ultramic.2013.12.003 offenbart ein Ptychographie-Bildgebungsverfahren mit einem roten, grünen und blauen Laser.

In den vergangen Jahren haben lasergetriebene kohärente Strahlungsquellen im extremen Ultraviolett (XUV) eine enorme Performancesteigerung erfahren, womit hochaufgelöste Ptychographie im Labormaßstab möglich geworden ist. Neueste Implementierungen erreichen eine Auflösung bis in den sub-20 nm-Bereich und erlauben Bildgebung mit quantitativem Amplituden- und Phasenkontrast einschließlich räumlich aufgelöster Materialidentifikation anhand des gemessenen komplexen Brechungsindex. Dabei werden allerdings Messzeiten von ca. 1 h für eine untersuchte Fläche auf dem Objekt von 1000 µm² benötigt, womit das Bildfeld ("field of view", FOV) in der Praxis stets sehr klein bleibt. Interessante Bereiche des Objektes müssen also vorher identifiziert werden. Dafür wird das Objekt normalerweise zuvor in einem Lichtmikroskop untersucht. Dieses erlaubt zwar nur eine deutlich schlechtere räumliche Auflösung bei ggfs. ungünstigem Kontrast, bietet aber ein großes FOV, welches sich idealerweise über das gesamte Objekt erstrecken kann. Somit kann ein Überblicksbild gewonnen werden und darin können interessante Strukturen für die nachfolgende hochauflösende XUV-Mikroskopie identifiziert und lokalisiert werden.

Zusätzlich ist es besonders für biologische Anwendungen wünschenswert, bestimmte etablierte Mikroskopie-Modalitäten im sichtbaren Spektralbereich (VIS) mit der hochauflösenden Mikroskopie im XUV zu kombinieren. Als Beispiel sei hier die Fluoreszenzmikroskopie genannt, die mit speziellen Fluoreszenzmarkern präparierte Proteine und Moleküle bei Anregung im VIS sichtbar machen kann. Aber auch andere optische Anregungsmechanismen und zu beobachtende Antworten des Objektes (z.B., Erzeugung der zweiten/dritten Harmonischen, kohärente Anti-Stokes-Raman-Streuung, CARS etc.) sind denkbar. Die Kombination von XUV-Bildgebung mit Fluoreszenzmikroskopie im VIS wurde bereits demonstriert (siehe P. D. Baksh et al., "Quantitative and correlative extreme ultraviolet coherent imaging of mouse hippocampal neurons at high resolution", Sci. Adv., vol. 6, no. 18, 2020). Hierfür musste das Objekt jedoch vom Fluoreszenzmikroskop in das XUV- Mikroskop transferiert werden und die entstandenen Bilder geeignet überlagert werden.

Bei solchen Anwendungen erfordert die korrelative Überlagerung der hochauflösenden, per Ptychographie gewonnen XUV-Bilder mit den per Lichtmikroskop erhaltenen Bildern eine Skalierung in 2D, eine Translation in 2D, eine Rotation und ggfs. weitere geometrische Entzerrungen der Bilder, was zusätzliche Arbeitsaufwand in der Bildauswertung bedeutet. Des Weiteren kann es bei der Identifikation von charakteristischen Strukturen des Objektes, die zur Bildentzerrung, -skalierung und -überlagerung nötig sind, zu Mehrdeutigkeiten kommen. Evtl. sind ähnliche Strukturen bei zwei verschiedenen Wellenlängen auch gar nicht zu erkennen. Somit kann eine korrekte Korrelation der Bildkoordinaten, d.h. eine korrekte Überlagerung der Bilder erschwert bzw. unmöglich werden.

Aufgabe der Erfindung ist es, ein verbessertes Bildgebungsverfahren und ein entsprechendes System bereit zu stellen, bei denen die beschriebenen Nachteile vermieden werden.

Diese Aufgabe löst die Erfindung ausgehend von einem Bildgebungsverfahren der eingangs genannten Art dadurch, dass die Beleuchtungsstrahlung bei zumindest zwei verschiedenen Beleuchtungswellenlängen erzeugt wird, wobei für jede der zumindest zwei verschiedenen Beleuchtungswellenlängen Intensitätsmuster für zwei oder mehrere Lateralpositionen detektiert werden, und wobei für jede Beleuchtungswellenlänge ein Bild des Objektes aus den für die jeweilige Beleuchtungswellenlänge detektierten Intensitätsmustern rekonstruiert wird.

Ausgehend von einem Bildgebungssystem der eingangs genannten Art löst die Erfindung die Aufgabe dadurch, dass die Beleuchtungslichtquelle dazu ausgelegt ist, die Beleuchtungsstrahlung bei zumindest zwei verschiedenen Beleuchtungswellenlängen zu erzeugen, wobei die Steuereinheit zum Ansteuern der Positionierungseinheit und des Flächendetektors in der Weise eingerichtet ist, dass für jede der zumindest zwei verschiedenen Beleuchtungswellenlängen mehrere Intensitätsmuster, nämlich für zwei oder mehrere Lateralpositionen detektiert werden, wobei der Computer dazu eingerichtet ist, für jede Beleuchtungswellenlänge ein Bild des Objektes aus den für die jeweilige Beleuchtungswellenlänge detektierten Intensitätsmustern zu rekonstruieren.

Der Vorteil der Erfindung gegenüber dem Stand der Technik ist, dass alle Bilder, die für verschiedene Beleuchtungswellenlängen generiert werden, in einer einzigen Apparatur gewonnen werden können. Es wird nur eine Beleuchtungslichtquelle benötigt, die die Beleuchtungsstrahlung bei zumindest zwei verschiedenen Beleuchtungswellenlängen erzeugt. Die gewonnenen Bilder sind auf diese Weise automatisch zueinander positionskorreliert, d.h. sie teilen ein gemeinsames Koordinatensystem, welches durch die (bekannte) Positionierung des Objektes eindeutig bestimmt ist. Zur korrekten Überlagerung der Bilder wird keine Skalierung, Translation, Rotation oder geometrische Entzerrung benötigt. Die Bilder, wie sie der Phasenrekonstruktionsalgorithmus berechnet, sind für alle Beleuchtungswellenlängen automatisch positionskorreliert zueinander. Damit einher geht eine enorme Zeitersparnis bei der Auswertung. Des Weiteren ist für verschiedene Modalitäten kein Wechsel des Mikroskops/der Apparatur nötig, wodurch sich wiederum eine Zeitersparnis ergibt und eine Veränderung, Kontamination oder Zerstörung der Probe vermieden werden kann.

Im Hinblick auf verschiedene Modalitäten ist anzumerken, dass gemäß der Erfindung nicht sämtliche Intensitätsmuster per Phasenrekonstruktionsalgorithmus in Bilddaten umgerechnet werden müssen. Es ist z.B. denkbar, dass zumindest ein Satz von Intensitätsmustern, die einer ersten Beleuchtungswellenlänge zugeordnet sind, tatsächlich per Ptychographiealgorithmus in ein Bild des Objektes umgerechnet werden, während jedoch ein weiterer Satz von Intensitätsmustern, die einer zweiten Beleuchtungswellenlänge zugeordnet sind, zu einem Rasterbild bzw. zu einem Rastermikroskopbild kombiniert werden. Das bedeutet, dass die Bildpunktwerte des rekonstruierten Rasterbildes der an der betreffenden (d.h. der zu den Koordinaten des Bildpunktes korrespondierenden) Lateralposition detektierten Intensität entsprechen (wie bei der konventionellen Rastermikroskopie üblich). Dies ergibt insbesondere dann Sinn, wenn bei der zweiten Beleuchtungswellenlänge eine Fluoreszenzbildgebung erfolgt, da das von dem Objekt abgestrahlte Fluoreszenzlicht nicht kohärent ist, d.h. eine Phasenrekonstruktion gar nicht möglich ist. In diesem Fall kann aber das gewonnene Rasterbild, in diesem Fall also das Fluoreszenzbild, zweckmäßig mit der aus der Ptychographierekonstruktion gewonnenen Beleuchtungsfunktion entfaltet werden, um die räumliche Auflösung zu erhöhen. Das Ergebnis ist ein (hoch auflösendes) Ptychografie-Bild bei der ersten Beleuchtungswellenlänge und ein damit positionskorreliertes Raster- bzw. Fluoreszenzbild.

Bei einer bevorzugten Ausgestaltung sollten in benachbarten Lateralpositionen mit der Beleuchtungsstrahlung beleuchtete Bereiche des Objektes räumlich überlappen. Die Überlappung ist vorteilhaft für die Konditionierung der Phasenrekonstruktion anhand der Intensitätsmuster.

Das erfindungsgemäße Bildgebungsverfahren eignet sich für Beleuchtungswellenlängen im Bereich zwischen 0,01 nm und 3 mm, vorzugsweise im Röntgenbereich, im XUV-Bereich, im VIS-Bereich, im IR-Bereich, im midIR-Bereich oder im THz-Bereich. Damit werden die relevanten praktischen Anwendungsfelder der Erfindung abgedeckt.

Bei einer möglichen Ausgestaltung weisen die den verschiedenen Beleuchtungswellenlängen zugeordneten Strahlungsanteile der Beleuchtungsstrahlung einen kollinearen Strahlverlauf auf. Die Beleuchtungsstrahlung der verschiedenen Wellenlängen kann auf diese Weise denselben (oder parallelen) Strahlverlauf in dem verwendeten Bildgebungssystem haben. Die praktische Realisierung wird dadurch besonders einfach.

Erfindungsgemäß werden die den verschiedenen Beleuchtungswellenlängen zugeordneten Strahlungsanteile der Beleuchtungsstrahlung durch nichtlineare Frequenzkonversion von Laserstrahlung einer Fundamentalwellenlänge erzeugt. Durch die nichtlineare Frequenzkonversion können die Beleuchtungswellenlängen z.B. bei höheren Harmonischen der Fundamentalwellenlänge erzeugt werden. Die Erzeugung unterschiedlicher Beleuchtungswellenlängen durch Summen- oder Differenzfrequenzerzeugung oder andere nichtlineare Prozesse (z.B. Erzeugung hoher Harmonischer in Gasmedien) ist ebenso denkbar. Durch die nichtlineare Frequenzkonversion (z.B. in einem phasenangepassten oder quasi-phasenangepassten nichtlinearen Medium) haben die Strahlungsanteile bei den unterschiedlichen Wellenlängen eine definierten Verlauf zueinander. Idealerweise verlaufen die verschiedenen Anteile der Beleuchtungsstrahlung kollinear. Bei einer praktischen Realisierung umfasst die Beleuchtungslichtquelle also z.B. einen Laser, eingerichtet zur Erzeugung von Laserstrahlung bei einer Fundamentalwellenlänge, und einen nichtlinearen Frequenzkonverter, eingerichtet zur Erzeugung der den verschiedenen Beleuchtungswellenlängen zugeordneten Strahlungsanteile der Beleuchtungsstrahlung durch nichtlineare Frequenzkonversion der Laserstrahlung des Lasers, wobei die verschiedenen Strahlungsanteile einen kollinearen Verlauf aufweisen.

Bei einer möglichen weiteren Ausgestaltung erfolgt zur Selektion einer der Beleuchtungswellenlängen bei der Detektion eines dieser Beleuchtungswellenlänge jeweils zugeordneten Intensitätsmusters eine spektrale Filterung der Beleuchtungsstrahlung. Hierzu kann im Strahlverlauf der Beleuchtungsstrahlung vor und/oder hinter dem Objekt ein Spektralfilter angeordnet ist. Dieses kann zur Selektion jeweils einer der Beleuchtungswellenlängen bei der Detektion eines dieser Beleuchtungswellenlänge zugeordneten Intensitätsmusters eingerichtet sein. Das Spektralfilter kann hinsichtlich der selektierten Wellenlänge verstellbar sein, sodass z.B. nacheinander, d.h. sequenziell die Detektion der Intensitätsmuster bei den verschiedenen selektierten Beleuchtungswellenlängen erfolgen kann.

Vorteilhaft kann die Detektion der Intensitätsmuster, wie bei der Ptychographie üblich, ohne abbildende Optik erfolgen. Abbildungsfehler von optischen Komponenten spielen somit bei der Bildgebung keine Rolle. Soweit optische Komponenten für die Beleuchtung des Objektes, d.h. zum Richten der Beleuchtungsstrahlung auf einen Bereich des Objektes verwendet werden, sollten diese möglichst achromatisch hinsichtlich der verschiedenen Beleuchtungswellenlängen sein.

Bei einer möglichen Ausgestaltung kann eine zur Strahlformung ausgelegte Maske im Strahlverlauf zwischen Beleuchtungslichtquelle und Objekt vorgesehen sein, um den beleuchteten Bereich auf dem Objekt, d.h. die Beleuchtungsfunktion wellenlängenunabhängig präzise vorzugeben. Für die relative Bewegung von Objekt und Verlauf der Beleuchtungsstrahlung in die zwei oder mehreren Lateralpositionen kann die Maske lateral beweglich ausgebildet sein, z.B. durch Anordnung der Maske an einem beweglichen Halter. Die verschiedenen Lateralpositionen der Maske werden dann von dem Phasenrekonstruktionsalgorithmus bei der Bildrekonstruktion entsprechend berücksichtigt. Die Positionierung der Maske kann bei der praktischen Realisierung einfacher sein als die Positionierung der Beleuchtungslichtquelle oder des Objekts. Die Maske kann z.B. eine einfache Lochmaske sein, um den beleuchteten Bereich zu begrenzen, ebenso sind Masken zur Erzeugung komplexerer Amplituden- und/oder Phasenmuster denkbar. Es ist auch möglich, unterschiedliche Masken für die verschiedenen Beleuchtungswellenlängen und/oder für unterschiedliche Bildgebungsaufgaben, z.B. unterschiedliche Objektkategorien, zu verwenden.

Nachfolgend wird ein Ausführungsbeispiel der Erfindung anhand der Zeichnung näher erläutert. Es zeigt:

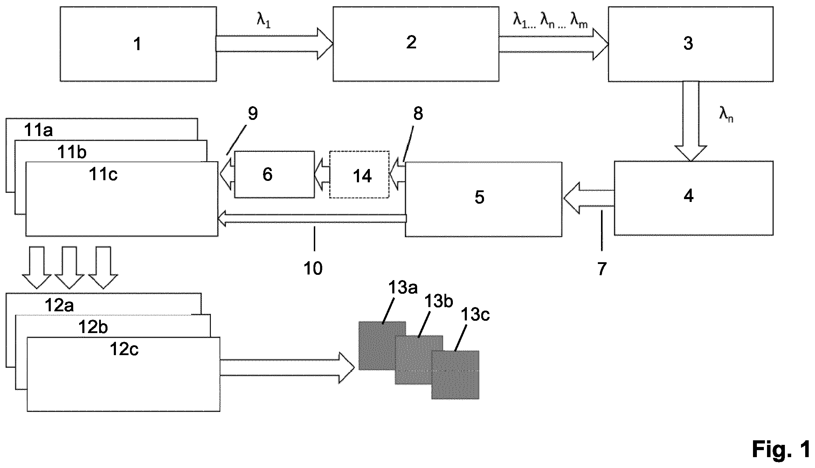

- Figur 1:: erfindungsgemäßes Bildgebungssystem als Blockdiagramm.

Die Figur 1 zeigt schematisch ein Bildgebungssystem für die korrelative Mikroskopie bei verschiedenen Beleuchtungswellenlängen, das prinzipiell vom Röntgenbereich, über das XUV, den sichtbaren (VIS), den infraroten (IR) bis in den THz-Spektralbereich funktioniert.

Das System kombiniert einen Laser 1, einen nichtlinearen Frequenzkonverter 2, ein verstellbares Spektralfilter 3, eine Beleuchtungsoptik 4, eine Positionierungseinheit 5 und einen Flächendetektor 6 (z.B. ein CCD-Element) zur Gewinnung von Bilddaten mittels der Ptychographie.

Während der Laser 1 Laserstrahlung bei einer fundamentalen Wellenlänge λ₁ emittiert, erlaubt es der Frequenzkonverter 2 Beleuchtungsstrahlung bei anderen Beleuchtungswellenlängen λ_{q} zu erzeugen. Beispiele für geeignete nichtlineare Prozesse sind SHG (Second Harmonic Generation), THG (Third Harmonic Generation), usw., HHG (High Harmonic Generation), Summenfrequenzerzeugung (SFG), Differenzfrequenzerzeugung (DFG) etc.. Von Vorteil ist die kollineare Realisierung der Frequenzkonversion, die für viele der genannten nichtlinearen Prozesse automatisch gegeben ist. Kollinearität bedeutet hier, dass Ort und Richtung der Laserstrahlung (d.h. die Strahllage im Raum) für unterschiedliche λ_{q} übereinstimmt.

Das Spektralfilter 3 selektiert eine Beleuchtungswellenlängen λₙ (optional auch mehrere), die zur Beleuchtung eines von der Positioniereinheit 5 getragenen Objektes (nicht dargestellt) verwendet wird. Durch die Filterung bleibt die Kollinearität möglichst erhalten. Das ist z.B. für Farbfilter, Etalons, dünne Folien etc. bei kleinen Einfallswinkeln in guter Näherung gegeben, aber auch für bestimme Gitter-basierte Monochromatoren.

Alle optischen Komponenten der Beleuchtungsoptik 4 sollten quasiachromatisch sein, d.h. für alle Beleuchtungswellenlängen ausreichend gut funktionieren. "Ausreichend gut funktionieren" bedeutet hier für die Ptychographie, dass eine räumliche Bündelung der Strahlung auf einen Bereich des Objektes (bei 7 angedeutet) für alle Wellenlängen möglich sein muss und dass die Kollinearität ebenfalls ausreichend gut erhalten bleiben sollte. Dies gilt stets (bis auf Reflexionsverluste für unterschiedliche Wellenlängen) für reflektive Optiken (z.B. Spiegel), mit Einschränkungen auch für diffraktive Komponenten (z.B. Zonenplatten) und refraktive Optiken (z.B. Linsen).

Eine einfache Amplitudenmaske, ggf. auch eine Phasenmaske (nicht dargestellt) kann zusätzlich im Strahlengang direkt vor dem Objekt verwendet werden, um die Beleuchtung zu formen und um die Kollinearität der Strahlungsanteile bei den verschiedenen Beleuchtungswellenlängen auf dem Objekt zu gewährleisten. Dabei können optional unterschiedliche Masken für unterschiedliche Wellenlängen verwendet werden, wenn deren Positionierung mit genügender Genauigkeit möglich ist.

Für jede Beleuchtungswellenlänge kann nun ein Ptychographiescan durchgeführt werden. Dafür werden mittels einer Steuereinheit (nicht dargestellt) das verstellbare Spektralfilter 3, die Positioniereinheit 5 und der Flächendetektor 6 in der Weise angesteuert, dass das Objekt sequenziell in mehrere vorgegebene Lateralpositionen bewegt wird und entsprechend mehrere der bei 8 hinter dem Objekt entstehenden Beugungsbilder als digitale Intensitätsmuster 9 am Ausgang des Flächendetektors 6 detektiert werden, wobei jeder der Lateralpositionen bei der jeweiligen Beleuchtungswellenlänge ein detektiertes Intensitätsmuster 9 zugeordnet ist. Die den einzelnen Intensitätsmustern 9 zugeordneten Positionsdaten 10 werden zu den Intensitätsmustern 9 gespeichert und aus der Kombination der Positionsdaten 10 und den Intensitätsmustern 9 entsteht für jede Beleuchtungswellenlänge λₙ jeweils ein Ptychographie-Datensatz 11a, 11b, 11c, ....

Entscheidend für die Funktion des Systems über weite Spektralbereiche der Beleuchtungsstrahlung ist, dass die eigentliche Bilderzeugung (bei 8) und die Flächendetektion der Intensitätsmuster 9 linsenlos erfolgt, d.h. es wird keine abbildende Optik verwendet. Lediglich die Größe des mit der Beleuchtungsstrahlung beleuchteten Bereichs auf dem Objekt muss ggf. für unterschiedliche Wellenlängen angepasst werden.

Ein geeigneter numerischer Phasenrekonstruktionsalgorithmus 12a, 12b, 12c, ... wird mittels eines (nicht dargestellten) Computers für jeden der Datensätze 11a, 11b, 11c, ... angewendet, um für jede Beleuchtungswellenlänge ein Bild 13a, 13b, 13c, ... des Objektes zu erzeugen.

Da den Algorithmen 12a, 12b, 12c, ... in jedem Ptychographiedatensatz 11a, 11b, 11c, ... die Lateralpositionen der Beleuchtung auf dem Objekt zur Verfügung stehen, können die Algorithmen nicht nur die jeweilige Beleuchtungsfunktion von der Objekttransmission trennen, sondern auch die Bildkoordinaten für das jeweilige Bild 13a, 13b, 13c des Objektes ermitteln. Diese Bildkoordinaten basieren auf den gemessenen Objektpositionen im jeweiligen Ptychographiedatensatz 11a, 11b, 11c, ... . Da für alle Beleuchtungswellenlängen λₙ ein und dieselbe Positioniereinheit 5 für das Objekt verwendet wird, sind die Bildkoordinaten alle Bilder 13a, 13b, 13c, ... zueinander automatisch positionskorreliert.

Es muss lediglich sichergestellt werden, dass die Position (und ggfs. auch Form) der Beleuchtungsfunktion, d.h. der beleuchtete Bereich auf dem Objekt, für die unterschiedlichen Beleuchtungswellenlängen bekannt ist. Dies ist im einfachsten Fall durch Verwendung einer festen Beleuchtungsmaske (nicht dargestellt) für alle Beleuchtungswellenlängen realisierbar. Bei ausreichend guter Kollinearität der verschiedenen Beleuchtungswellenlängen zueinander kann auf diese Maske auch verzichtet werden. Es ist prinzipiell aber auch möglich, unterschiedliche Beleuchtungsmasken für die verschiedenen Wellenlängen jeweils vor dem Objekt zu positionieren. Hierbei müssen die verschiedenen Positionen der jeweils verwendeten Masken für die Aufnahme der verschiedenen Ptychographiedatensätze 11a, 11b, 11c, ... bekannt sein.

Das Prinzip der Erfindung ist in Figur 1 exemplarisch für eine Transmissionsaufnahme der Intensitätsmuster 9 dargestellt. Das Prinzip funktioniert genauso für eine Reflexionsaufnahme, wobei der Flächendetektor das von dem Objekt reflektierte Beugungsbild als Intensitätsmuster 9 detektiert.

Optional kann bei dem dargestellten System ein zusätzliches Filter (Spektral- oder Polarisationsfilter) 14 hinter dem Objekt positioniert werden, um eine Antwort des Objektes bei einer anderen Wellenlänge als der jeweiligen Beleuchtungswellenlänge zu detektieren. Dies ist z.B. für die Detektion von zweiter oder höherer Harmonischer oder Fluoreszenz, die in der Probe erzeugt wird, sinnvoll.

## Patentansprüche

1. Bildgebungsverfahren mit den folgenden Verfahrensschritten:
- Erzeugung von zumindest teilkohärenter elektromagnetischer Beleuchtungsstrahlung,
- Beleuchten eines Objektes mit der Beleuchtungsstrahlung,
- Bewegen des Objektes lateral relativ zum Verlauf der Beleuchtungsstrahlung in zwei oder mehrere Lateralpositionen,
- Detektieren von mehreren Intensitätsmustern, wobei jeder der Lateralpositionen ein detektiertes Intensitätsmuster zugeordnet ist, wobei die Intensitätsmuster durch Streuung oder Beugung der Beleuchtungsstrahlung an dem Objekt in einer Detektionsebene erzeugt werden, und
- Rekonstruieren eines Bildes des Objektes aus den detektierten Intensitätsmustern mittels eines Phasenrekonstruktionsalgorithmus,
wobei die Beleuchtungsstrahlung bei zumindest zwei verschiedenen Beleuchtungswellenlängen erzeugt wird, wobei für jede der zumindest zwei verschiedenen Beleuchtungswellenlängen Intensitätsmuster für zwei oder mehrere Lateralpositionen detektiert werden, und wobei für jede Beleuchtungswellenlänge ein Bild des Objektes aus den für die jeweilige Beleuchtungswellenlänge detektierten Intensitätsmustern rekonstruiert wird,
**dadurch gekennzeichnet, dass** die den verschiedenen Beleuchtungswellenlängen zugeordneten Strahlungsanteile der Beleuchtungsstrahlung durch nichtlineare Frequenzkonversion von Laserstrahlung einer Fundamentalwellenlänge erzeugt werden.

2. Bildgebungsverfahren nach Anspruch 1, wobei nicht für jede der Beleuchtungswellenlängen ein Bild des Objekte aus den dieser Beleuchtungswellenlänge zugeordneten Intensitätsmustern per Phasenrekonstruktionsalgorithmus rekonstruiert wird.

3. Bildgebungsverfahren nach Anspruch 2, wobei zumindest ein Bild aus den detektiertes Intensitätsmustern, die einer ersten Beleuchtungswellenlänge zugeordnet sind, per Phasenrekonstruktionsalgorithmus rekonstruiert wird, während die detektierten Intensitätsmuster, die einer zweiten Beleuchtungswellenlänge zugeordnet sind, zu einem Rasterbild kombiniert werden.

4. Bildgebungsverfahren nach einem der Ansprüche 1 bis 3, wobei die den verschiedenen Beleuchtungswellenlängen zugeordneten Strahlungsanteile der Beleuchtungsstrahlung einen kollinearen Strahlverlauf aufweisen.

5. Bildgebungsverfahren nach einem der Ansprüche 1 bis 4, wobei die Beleuchtungswellenlängen höhere Harmonische der Fundamentalwellenlänge sind.

6. Bildgebungsverfahren nach einem der Ansprüche 1 bis 5, wobei zur Selektion einer der Beleuchtungswellenlängen bei der Detektion eines dieser Beleuchtungswellenlänge zugeordneten Intensitätsmusters eine spektrale Filterung der Beleuchtungsstrahlung erfolgt.

7. Bildgebungsverfahren nach einem der Ansprüche 1 bis 6, wobei die Detektion der Intensitätsmuster ohne abbildende Optik erfolgt.

8. Bildgebungsverfahren nach einem der Ansprüche 1 bis 7, wobei die Beleuchtungswellenlängen im Bereich zwischen 0,01 nm und 3 mm liegen, vorzugsweise im Röntgenbereich, im XUV-Bereich, im VIS-Bereich, im IR-Bereich, im midIR-Bereich oder im THz-Bereich.

9. Bildgebungsverfahren nach einem der Ansprüche 1 bis 8, wobei in benachbarten Lateralpositionen mit der Beleuchtungsstrahlung beleuchtete Bereiche des Objektes räumlich überlappen.

10. Bildgebungssystem zur Durchführung des Verfahrens nach einem der Ansprüche 1 bis 10, mit
- einer Beleuchtungslichtquelle, eingerichtet zur Erzeugung von zumindest teilkohärenter elektromagnetischer Beleuchtungsstrahlung,
- einer Beleuchtungsoptik (4), eingerichtet zum Richten der Beleuchtungsstrahlung auf einen Bereich eines Objektes,
- einer Positionierungseinheit (5), eingerichtet zum Bewegen des Objektes und des Verlaufs der Beleuchtungsstrahlung relativ zueinander,
- einen Flächendetektor (6), eingerichtet zum Detektieren von Intensitätsmustern (9), die durch Streuung oder Beugung der Beleuchtungsstrahlung an dem Objekt in einer durch die Ebene des Flächendetektors (6) vorgegebenen Detektionsebene erzeugt werden,
- einer Steuereinheit, eingerichtet zum Ansteuern der Positionierungseinheit (5) und des Flächendetektors (6) in der Weise, dass das Objekt sequenziell in zwei oder mehrere vorgegebene Lateralpositionen bewegt wird und zwei oder mehrere Intensitätsmuster (9) detektiert werden, wobei jeder der Lateralpositionen ein detektiertes Intensitätsmuster (9) zugeordnet ist, und
- einen Computer, der durch Software dazu eingerichtet ist, ein Bild (13a, 13b, 13c) des Objektes aus den detektierten Intensitätsmustern (9) mittels eines Phasenrekonstruktionsalgorithmus (12a, 12b, 12c) zu rekonstruieren,
wobei die Beleuchtungslichtquelle dazu ausgelegt ist, die Beleuchtungsstrahlung bei zumindest zwei verschiedenen Beleuchtungswellenlängen zu erzeugen, wobei die Steuereinheit zum Ansteuern der Positionierungseinheit (5) und des Flächendetektors (6) in der Weise eingerichtet ist, dass für jede der zumindest zwei verschiedenen Beleuchtungswellenlängen Intensitätsmuster (9) für zwei oder mehrere Lateralpositionen detektiert werden, wobei der Computer dazu eingerichtet ist, für jede Beleuchtungswellenlänge ein Bild (13a, 13b, 13c) des Objektes aus den für die jeweilige Beleuchtungswellenlänge detektierten Intensitätsmustern (9) zu rekonstruieren,
**dadurch gekennzeichnet, dass** die Beleuchtungslichtquelle einen Laser (1) umfasst, eingerichtet zur Erzeugung von Laserstrahlung bei einer Fundamentalwellenlänge, und einen nichtlinearen Frequenzkonverter (2), eingerichtet zur Erzeugung der den verschiedenen Beleuchtungswellenlängen zugeordneten Strahlungsanteile der Beleuchtungsstrahlung durch nichtlineare Frequenzkonversion der Laserstrahlung des Lasers (1), wobei die verschiedenen Strahlungsanteile einen kollinearen Verlauf aufweisen.

11. Bildgebungssystem nach Anspruch 10, wobei im Strahlverlauf der Beleuchtungsstrahlung vor und/oder hinter dem Objekt ein Spektralfilter (3, 14) angeordnet ist.

12. Bildgebungssystem nach Anspruch 11, wobei das Spektralfilter (3, 14) hinsichtlich der selektierten Wellenlänge verstellbar ist.

13. Bildgebungssystem nach einem der Ansprüche 10 bis 12, wobei die Beleuchtungsoptik (4) hinsichtlich der verschiedenen Beleuchtungswellenlängen achromatisch ist.

14. Bildgebungssystem nach einem der Ansprüche 10 bis 13, wobei eine zur Strahlformung ausgelegte Maske im Strahlverlauf zwischen Beleuchtungslichtquelle und Objekt angeordnet ist.

## Claims

1. Imaging method with the following steps:
- Generating at least partially coherent electromagnetic illumination radiation,
- Illuminating an object with the illumination radiation,
- Moving the object laterally relative to the path of the illumination radiation to two or more lateral positions,
- Detecting multiple intensity patterns, wherein each of the lateral positions is associated with a detected intensity pattern, and wherein the intensity patterns are generated by scattering or diffraction of the illumination radiation by the object in a detection plane, and
- Reconstructing an image of the object from the detected intensity patterns using a phase reconstruction algorithm,
wherein the illumination radiation is generated at at least two different illumination wavelengths, wherein intensity patterns for two or more lateral positions are detected for each of the at least two different illumination wavelengths, and wherein, for each illumination wavelength, an image of the object is reconstructed from the intensity patterns detected for the respective illumination wavelength,
**characterized in that** the radiation components of the illumination radiation associated with the different illumination wavelengths are generated by nonlinear frequency conversion of laser radiation at a fundamental wavelength.

2. Imaging method according to claim 1, wherein an image of the object is not reconstructed for each of the illumination wavelengths using a phase reconstruction algorithm based on the intensity patterns associated with that illumination wavelength.

3. Imaging method according to claim 2, wherein at least one image is reconstructed from the detected intensity patterns associated with a first illumination wavelength using a phase reconstruction algorithm, while the detected intensity patterns associated with a second illumination wavelength are combined to form a raster image.

4. Imaging method according to any one of claims 1 through 3, wherein the radiation components of the illumination radiation associated with the various illumination wavelengths have a collinear beam path.

5. Imaging method according to any one of claims 1 through 4, wherein the illumination wavelengths are higher harmonics of the fundamental wavelength.

6. Imaging method according to any one of claims 1 through 5, wherein spectral filtering of the illumination radiation is performed to select one of the illumination wavelengths upon detection of an intensity pattern associated with that illumination wavelength.

7. Imaging method according to any one of claims 1 through 6, wherein the intensity patterns are detected without the use of imaging optics.

8. Imaging method according to any one of claims 1 through 7, wherein the illumination wavelengths lie in the range between 0.01 nm and 3 mm, preferably in the X-ray range, the XUV range, the VIS range, the IR range, the midiR range, or the THz range.

9. Imaging method according to any one of claims 1 through 8, wherein regions of the object illuminated by the illumination radiation in adjacent lateral positions overlap spatially.

10. Imaging system for performing the method according to any one of claims 1 through 10, with
- an illumination light source configured to generate at least partially coherent electromagnetic illumination radiation,
- an illumination optical system (4) configured to direct the illumination radiation onto a region of an object,
- a positioning unit (5) configured to move the object and the path of the illumination radiation relative to one another,
- a surface detector (6), configured to detect intensity patterns (9) generated by scattering or diffraction of the illumination radiation on the object in a detection plane defined by the plane of the surface detector (6),
- a control unit configured to control the positioning unit (5) and the surface detector (6) such that the object is sequentially moved to two or more predetermined lateral positions and two or more intensity patterns (9) are detected, wherein each of the lateral positions is associated with a detected intensity pattern (9), and
- a computer configured by software to reconstruct an image (13a, 13b, 13c) of the object from the detected intensity patterns (9) using a phase reconstruction algorithm (12a, 12b, 12c),
wherein the illumination light source is configured to generate the illumination radiation at at least two different illumination wavelengths, wherein the control unit is configured to control the positioning unit (5) and the surface detector (6) such that, for each of the at least two different illumination wavelengths, intensity patterns (9) are detected for two or more lateral positions, wherein the computer is configured to reconstruct, for each illumination wavelength, an image (13a, 13b, 13c) of the object from the intensity patterns (9) detected for the respective illumination wavelength,
**characterized in that** the illumination light source comprises a laser (1), configured to generate laser radiation at a fundamental wavelength, and a nonlinear frequency converter (2), configured to generate the radiation components of the illumination radiation associated with the various illumination wavelengths by means of nonlinear frequency conversion of the laser radiation from the laser (1), wherein the various radiation components have a collinear profile.

11. Imaging system according to claim 10, wherein a spectral filter (3, 14) is arranged in the path of the illumination radiation in front of and/or behind the object.

12. Imaging system according to claim 11, wherein the spectral filter (3, 14) is adjustable with respect to the selected wavelength.

13. Imaging system according to any one of claims 10 through 12, wherein the illumination optics (4) are achromatic with respect to the various illumination wavelengths.

14. Imaging system according to any one of claims 10 through 13, wherein a mask designed for beam shaping is arranged in the beam path between the illumination light source and the object.

## Revendications

1. Procédé d'imagerie avec les étapes du procédé suivantes:
- Génération d'un rayonnement d'éclairage électromagnétique au moins partiellement cohérent,
- Éclairage d'un objet avec la rayonnement d'éclairage,
- Déplacement latéral de l'objet par rapport à la direction du rayonnement d'éclairage vers deux ou plusieurs positions latérales,
- Détection de plusieurs profils d'intensité, dans lequel des profils d'intensité détectés étant associé à chacune des positions latérales, dans lequel les profils d'intensité étant générés par diffusion ou diffraction du rayonnement d'éclairage sur l'objet dans un plan de détection, et
- Reconstruction d'une image de l'objet à partir des profils d'intensité détectés à l'aide d'un algorithme de reconstruction de phase,
dans lequel le rayonnement d'éclairage étant généré à au moins deux longueurs d'onde d'éclairage différentes, dans lequel des profils d'intensité étant détectés pour deux ou plusieurs positions latérales pour chacune des au moins deux longueurs d'onde d'éclairage différentes, et dans lequel, pour chaque longueur d'onde d'éclairage, une image de l'objet est reconstruite à partir des profils d'intensité détectés pour la longueur d'onde d'éclairage respective,
**caractérisé en ce que** les composantes du rayonnement d'éclairage associées aux différentes longueurs d'onde d'éclairage sont générées par conversion de fréquence non linéaire d'un rayonnement laser d'une longueur d'onde fondamentale.

2. Procédé d'imagerie selon la revendication 1, dans lequel une image de l'objet n'est pas reconstruite pour chacune des longueurs d'onde d'éclairage à partir des profils d'intensité associés à cette longueur d'onde d'éclairage, au moyen d'un algorithme de reconstruction de phase.

3. Procédé d'imagerie selon la revendication 2, dans lequel au moins une image est reconstruite à l'aide d'un algorithme de reconstruction de phase à partir des profils d'intensité détectés associés à une première longueur d'onde d'éclairage, tandis que les profils d'intensité détectés associés à une deuxième longueur d'onde d'éclairage sont combinés pour former une image tramée.

4. Procédé d'imagerie selon l'une des revendications 1 à 3, dans lequel les composantes du rayonnement d'éclairage associées aux différentes longueurs d'onde d'éclairage présentent un trajet de rayonnement colinéaire.

5. Procédé d'imagerie selon l'une des revendications 1 à 4, dans lequel les longueurs d'onde d'éclairage sont des harmoniques supérieures de la longueur d'onde fondamentale.

6. Procédé d'imagerie selon l'une des revendications 1 à 5, dans lequel, pour sélectionner l'une des longueurs d'onde d'éclairage lors de la détection d'un profil d'intensité associé à cette longueur d'onde d'éclairage, on procède à un filtrage spectral du rayonnement d'éclairage.

7. Procédé d'imagerie selon l'une des revendications 1 à 6, dans lequel la détection des motifs d'intensité s'effectue sans optique d'imagerie.

8. Procédé d'imagerie selon l'une des revendications 1 à 7, dans lequel les longueurs d'onde d'éclairage se situent dans la plage comprise entre 0,01 nm et 3 mm, de préférence dans le domaine des rayons X, dans le domaine XUV, dans le domaine VIS, dans le domaine IR, dans le domaine midiR ou dans le domaine THz.

9. Procédé d'imagerie selon l'une des revendications 1 à 8, dans lequel des zones de l'objet éclairées par le rayonnement d'éclairage dans des positions latérales adjacentes se chevauchent dans l'espace.

10. Système d'imagerie destiné à mettre en œuvre le procédé selon l'une des revendications 1 à 10, avec
- une source de lumière d'éclairage, agencée pour générer un rayonnement électromagnétique d'éclairage au moins partiellement cohérent,
- un système optique d'éclairage (4), agencé pour diriger le rayonnement d'éclairage vers une zone d'un objet,
- une unité de positionnement (5), agencée pour déplacer l'objet et le trajet du rayonnement d'éclairage l'un par rapport à l'autre,
- un détecteur de surface (6), agencé pour détecter des motifs d'intensité (9) générés par diffusion ou diffraction du rayonnement d'éclairage sur l'objet dans un plan de détection défini par le plan du détecteur de surface (6),
- une unité de commande, agencée pour commander l'unité de positionnement (5) et le détecteur de surface (6) de telle sorte que l'objet soit déplacé séquentiellement vers deux ou plusieurs positions latérales prédéfinies et que deux ou plusieurs motifs d'intensité (9) soient détectés, chacune des positions latérales étant associée à un motif d'intensité détecté (9), et
- un ordinateur, configuré par un logiciel pour reconstruire une image (13a, 13b, 13c) de l'objet à partir des profils d'intensité détectés (9) au moyen d'un algorithme de reconstruction de phase (12a, 12b, 12c),
- dans lequel la source de lumière d'éclairage étant conçue pour générer le rayonnement d'éclairage à au moins deux longueurs d'onde d'éclairage différentes, l'unité de commande étant configurée pour commander l'unité de positionnement (5) et du détecteur de surface (6) est agencée de telle sorte que, pour chacune des au moins deux longueurs d'onde d'éclairage différentes, des profils d'intensité (9) soient détectés pour deux ou plusieurs positions latérales, l'ordinateur étant agencé pour reconstruire, pour chaque longueur d'onde d'éclairage, une image (13a, 13b, 13c) de l'objet à partir des profils d'intensité (9) détectés pour la longueur d'onde d'éclairage respective,
**caractérisé en ce que** la source de lumière d'éclairage comprend un laser (1), agencé pour générer un rayonnement laser à une longueur d'onde fondamentale, et un convertisseur de fréquence non linéaire (2), conçu pour générer les composantes du rayonnement d'éclairage associées aux différentes longueurs d'onde d'éclairage par conversion de fréquence non linéaire du rayonnement laser émis par le laser (1), les différentes composantes du rayonnement présentant une évolution colinéaire.

11. Système d'imagerie selon la revendication 10, dans lequel un filtre spectral (3, 14) est disposé dans le trajet du faisceau d'éclairage, en amont et/ou en aval de l'objet.

12. Système d'imagerie selon la revendication 11, dans lequel le filtre spectral (3, 14) est réglable en fonction de la longueur d'onde sélectionnée.

13. Système d'imagerie selon l'une des revendications 10 à 12, dans lequel le système optique d'éclairage (4) est achromatique pour les différentes longueurs d'onde d'éclairage.

14. Système d'imagerie selon l'une des revendications 10 à 13, dans lequel un masque conçu pour la mise en forme du faisceau est disposé dans le trajet du faisceau entre la source de lumière d'éclairage et l'objet.
